# EUROPEAN PATENT APPLICATION

(11) **EP 4 435 630 A1**
(43) Date of publication of application: **25.09.2024**
(21) Application number: 23192842.5
(22) Date of filing: 23.08.2023
(51) Int. Cl.: G06F 16/9035

(54) **INFORMATION PROCESSING APPARATUS, INFORMATION PROCESSING PROGRAM, AND INFORMATION PROCESSING METHOD**

(30) Priority: 20.03.2023 JP 2023044636
(71) Applicant: FUJIFILM Business Innovation Corp., Minato-ku Tokyo (JP)
(72) Inventor: TANIZAKI, Kosuke, Yokohama-shi, Kanagawa (JP)
(74) Representative: Kurig, Thomas

(57) **Abstract**

An information processing apparatus includes a processor configured to specify a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content, and notify the user of the recommended operation.

## Description

### BACKGROUND OF THE INVENTION

### (i) Field of the Invention

The present invention relates to an information processing apparatus, an information processing program, and an information processing method.

### (ii) Description of Related Art

JP2022-042882A discloses an information processing apparatus that selects a recommended item (for example, a product related to sales) related to an activity record (for example, a sales record) based on a keyword extracted from the activity record. JP5954053B discloses a search assistance system that stores a word extracted from a related document related to an action or a situation of a user as a keyword to be used in a search performed by the user. JP2013-122701A discloses an information search apparatus that displays a plurality of electronic documents in order of a relevance score with respect to an electronic document selected by a user based on the relevance score between each electronic document corresponding to a frequency with which the plurality of electronic documents are used at the same time.

### SUMMARY OF THE INVENTION

In a case where a user performs an operation with respect to electronic content, selecting an operation to be performed with respect to the electronic content may be difficult for the user in a case where there are a plurality of operations that can be performed with respect to the electronic content.

An object of the present invention is to enable a user to easily perceive an operation to be executed with respect to electronic content, compared to the user in a case where the user is not notified of the operation to be executed with respect to the electronic content operated by the user.

According to a first aspect of the present disclosure, there is provided an information processing apparatus including a processor configured to specify a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content, and notify the user of the recommended operation.

According to a second aspect of the present disclosure, there is provided the information processing apparatus according to the first aspect, in which the processor may be configured to, after the user performs an operation with respect to the target content, specify the recommended operation with respect to the target content after the operation by inputting state information indicating a state of the target content after the operation into the learning model, and notify the user of the recommended operation with respect to the target content after the operation.

According to a third aspect of the present disclosure, there is provided the information processing apparatus according to the first aspect, in which the learning model may output a plurality of recommended operations and prediction accuracy of each recommended operation, and the processor may be configured to notify the user of the plurality of recommended operations in an aspect corresponding to the prediction accuracy of each recommended operation.

According to a fourth aspect of the present disclosure, there is provided the information processing apparatus according to the first aspect, in which the processor may be configured to, before the user performs the recommended operation, predict an after-operation state that is a state of the target content after the recommended operation is executed, specify a subsequent recommended operation that is an operation to be performed with respect to the target content of the after-operation state, by inputting after-operation state information indicating the after-operation state into the learning model, and notify the user of the subsequent recommended operation.

According to a fifth aspect of the present disclosure, there is provided the information processing apparatus according to the fourth aspect, in which the processor may be configured to acquire the after-operation state information by rewriting the state information before performing the recommended operation based on a detail of the recommended operation.

According to a sixth aspect of the present disclosure, there is provided the information processing apparatus according to the fourth or fifth aspect, in which the processor may be configured to, in accordance with selection of the subsequent recommended operation by the user, control display of a screen to sequentially execute processing related to the recommended operation that changes the state of the target content to the after-operation state as a target of the subsequent recommended operation and processing related to the subsequent recommended operation with respect to the target content.

According to a seventh aspect of the present disclosure, there is provided the information processing apparatus according to the first aspect, in which the processor may be configured to display the recommended operation on a display unit in an aspect corresponding to the recommended operation based on operation type information in which an operation and a type of the operation are associated with each other.

According to an eighth aspect of the present disclosure, there is provided the information processing apparatus according to the first aspect, in which the state information may include a plurality of state items, and the processor may be configured to calculate a degree of contribution indicating a degree of contribution to specifying of the recommended operation for each state item based on a difference between output data of the trained learning model in a case where first state information of the target content is input and output data of the trained learning model in a case where second state information obtained by changing a value of one of a plurality of state items included in the first state information is input, and notify the user of the state item that has contributed to specifying of the recommended operation based on the degree of contribution of each state item.

According to a ninth aspect of the present disclosure, there is provided an information processing program causing a computer to specify a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content, and notify the user of the recommended operation.

According to a tenth aspect of the present disclosure, there is provided an information processing method including specifying a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content, and notifying the user of the recommended operation.

According to the first aspect, the ninth aspect, or the tenth aspect of the present invention, the user can easily perceive the operation to be executed with respect to the electronic content, compared to the user in a case where the user is not notified of the operation to be executed with respect to the electronic content operated by the user.

According to the second aspect of the present invention, the recommended operation of which the user is notified can be dynamically changed depending on a change in the state of the target content corresponding to the operation of the user.

According to the third aspect of the present invention, the user can perceive the prediction accuracy of the plurality of recommended operations.

According to the fourth or fifth aspect of the present invention, the user can perceive the subsequent recommended operation before performing the recommended operation.

According to the sixth aspect of the present invention, an effort of the user for executing the processing related to the recommended operation and the processing related to the subsequent recommended operation with respect to the target content can be reduced, compared to the effort in a case where the recommended operation and the subsequent recommended operation are sequentially performed with respect to the target content.

According to the seventh aspect of the present invention, the user can perceive the type of the recommended operation.

According to the eighth aspect of the present invention, the user can perceive the state item that has contributed to specifying of the recommended operation.

### BRIEF DESCRIPTION OF THE DRAWINGS

Exemplary embodiment(s) of the present invention will be described in detail based on the following figures, wherein:
Fig. 1 is a schematic configuration diagram of an information processing system according to the present exemplary embodiment;
Fig. 2 is a schematic configuration diagram of a user terminal;
Fig. 3 is a schematic configuration diagram of a server;
Fig. 4 is a conceptual diagram illustrating an example of a detail of an operation history DB;
Fig. 5 is a conceptual diagram illustrating an example of a detail of an operation detail DB;
Fig. 6 is a diagram illustrating a first example of a screen for providing a notification of a recommended operation;
Fig. 7 is a diagram illustrating an example of a screen displayed while, after a user operates a target electronic document, the recommended operation is performed with respect to the target electronic document after the operation;
Fig. 8 is a diagram illustrating a second example of the screen for providing the notification of the recommended operation;
Fig. 9 is a diagram illustrating a first example of a screen for providing a notification of a subsequent recommended operation;
Fig. 10 is a diagram illustrating a second example of the screen for providing the notification of the subsequent recommended operation;
Fig. 11 is a diagram illustrating an example of a notification screen for providing the notification of the recommended operation in an aspect corresponding to a type of the recommended operation;
Fig. 12 is a diagram illustrating an example of a notification screen for providing a notification of a state item that has contributed to specifying of the recommended operation; and
Fig. 13 is a flowchart illustrating a flow of processing of the server according to the present exemplary embodiment.

### DETAILED DESCRIPTION OF THE INVENTION

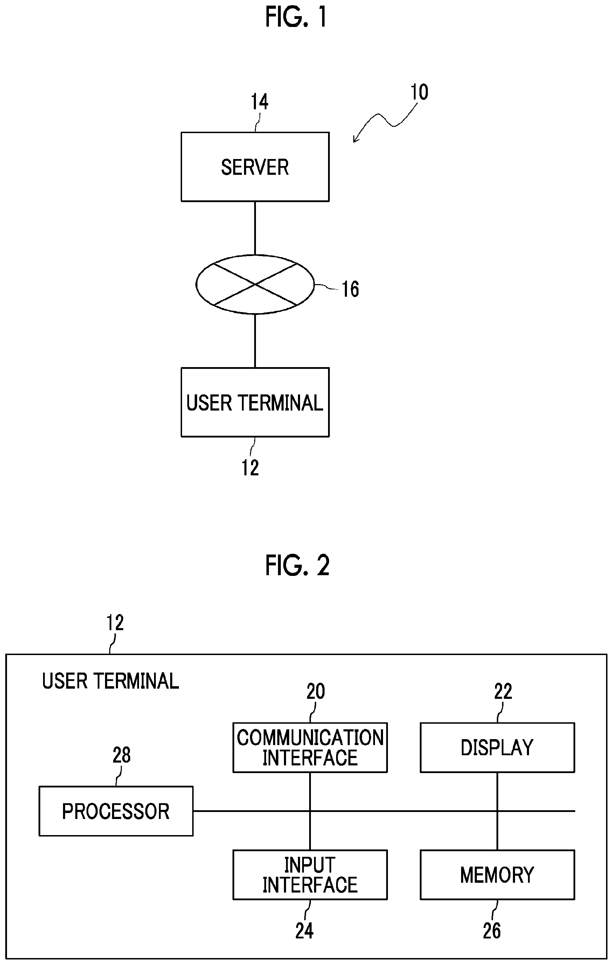

Fig. 1 is a schematic configuration diagram of an information processing system 10 according to the present exemplary embodiment. The information processing system 10 is configured to include a user terminal 12 used by a user, and a server 14 as an information processing apparatus. While only one user terminal 12 is illustrated in Fig. 1, the information processing system 10 may include a plurality of user terminals 12 used by a plurality of users. The user terminal 12 and the server 14 are communicably connected to each other via a communication line 16 such as a local area network (LAN) or a wide area network (WAN).

Fig. 2 is a schematic configuration diagram of the user terminal 12. While the user terminal 12 is, for example, a computer such as a personal computer, a tablet terminal, or a smartphone, the user terminal 12 is not limited thereto and may be any apparatus as long as the user terminal 12 has functions described below.

A communication interface 20 is configured with, for example, a network card. The communication interface 20 has a function of communicating with another apparatus such as the server 14.

A display 22 is configured with, for example, a liquid crystal display or an organic electro luminescence (EL) display. Various screens are displayed on the display 22.

An input interface 24 is configured with, for example, a keyboard, a mouse, or a touch panel. The input interface 24 is used for inputting an instruction of the user into the user terminal 12.

A memory 26 is configured to include, for example, a hard disk drive (HDD), a solid state drive (SSD), an embedded multi media card (eMMC), a read only memory (ROM), or a random access memory (RAM). A program for operating each part of the user terminal 12 and various pieces of information required for processing performed by a processor 28, described later, are stored in the memory 26.

The processor 28 is configured with, for example, a central processing unit (CPU). The processor 28 controls each part of the user terminal 12 based on the program stored in the memory 26.

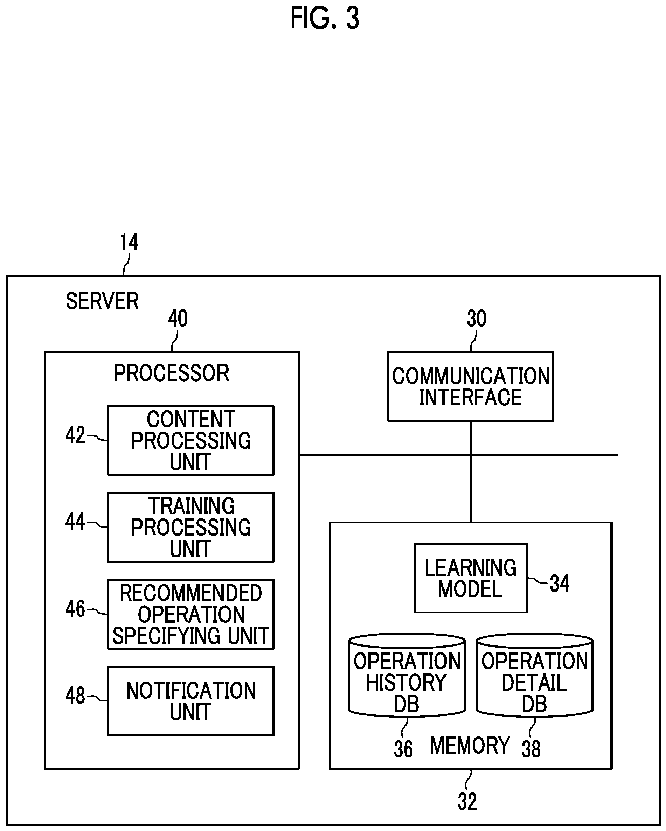

Fig. 3 is a schematic configuration diagram of the server 14. In the present exemplary embodiment, the server 14 is an apparatus that provides an electronic content management service for managing electronic content to the user. While an example in which the electronic content managed by the electronic content management service is an electronic document (that is, an example in which the server 14 provides an electronic document management service to the user) will be described in the present exemplary embodiment, the electronic content managed by the electronic content management service is not limited to the electronic document. The electronic content managed by the electronic content management service may be, for example, image data, music data, or program data. The electronic document management service stores the electronic document received from the user, provides the electronic document to the user in response to a request from the user, and furthermore, executes processing with respect to the electronic document in accordance with an operation of the user.

A communication interface 30 is configured with, for example, a network card. The communication interface 30 has a function of communicating with another apparatus such as the user terminal 12.

A memory 32 is configured to include, for example, an HDD, an SSD, an eMMC, a ROM, or a RAM. An information processing program for operating each part of the server 14 is stored in the memory 32. The information processing program can be stored in, for example, a computer readable non-transitory storage medium such as a universal serial bus (USB) memory or an SD card. The server 14 can read and execute the information processing program from the storage medium. In addition, as illustrated in Fig. 3, a learning model 34, an operation history database (DB) 36, and an operation detail DB 38 are stored in the memory 32.

While the learning model 34 may be, for example, a learning model using logistic regression or XGBoost, the learning model 34 may have another structure (for example, a neural network) as long as the learning model 34 has functions described below. The learning model 34 is a model that, in a case where the learning model 34 is sufficiently trained, takes state information indicating a state (will be specifically described later) of the electronic document as input data and that outputs an operation (will be specifically described later) to be performed by the user with respect to the electronic document. A method of training the learning model 34 and a method of using the trained learning model 34 will be described later.

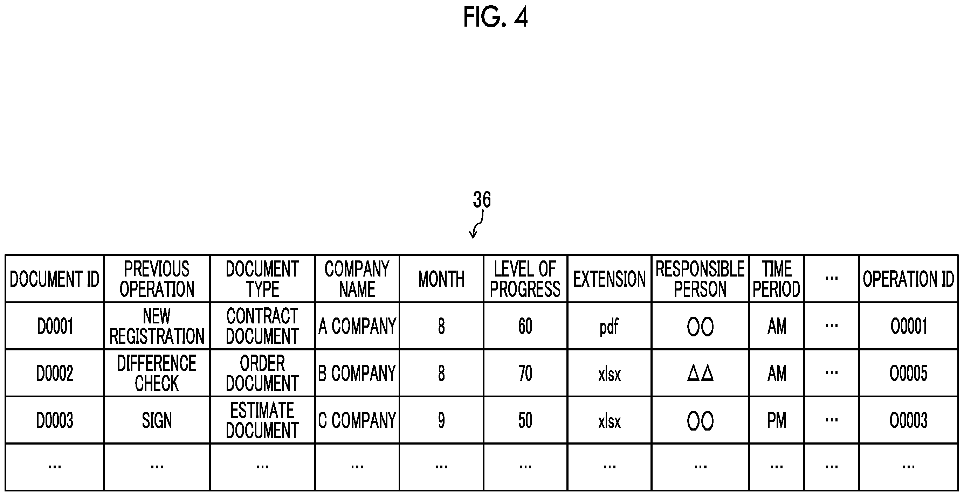

Fig. 4 is a conceptual diagram illustrating an example of a detail of the operation history DB 36. Information related to an operation performed in the past with respect to the electronic document in the electronic document management service is stored in the operation history DB 36. The "operation" in the present specification means a work performed by the user with respect to the electronic content (in the present exemplary embodiment, the electronic document). In the present exemplary embodiment, in a case where the user performs the operation with respect to the electronic document, the electronic document management service performs processing corresponding to the operation. Accordingly, information related to processing performed by the electronic document management service (in other words, a processor 40 described later) in accordance with the operation of the user performed in the past with respect to the electronic document in the electronic document management service can be said to be stored in the operation history DB 36.

In the present exemplary embodiment, the state information indicating the state of the electronic document and an operation ID are stored in association with each other in the operation history DB 36. The "state" of the electronic document is a concept including the attributes of the electronic document and an operation performed so far (before the operation indicated by the operation information is performed) with respect to the electronic document. The "attributes" of the electronic document include information included in the electronic document as meta-information of the electronic document, and information related to the electronic document included in the electronic document management service.

In the example in Fig. 4, the state information is associated with a document ID for uniquely identifying the electronic document in the operation history DB 36. In the example in Fig. 4, items "previous operation" to "time period" are the state information. Accordingly, the state information includes a plurality of state items in the present exemplary embodiment.

Among the state items illustrated in Fig. 4, "previous operation" is an operation that is most recently performed with respect to the electronic document, and is one of state items indicating the operation performed so far with respect to the electronic document. Note that the operation performed so far only indicates the state of the electronic document and is different from the operation performed with respect to the electronic document of the state (that is, an operation indicated by the operation ID, described later). The operation performed so far is not limited to the previous operation and may include a plurality of operations performed so far with respect to the electronic document.

In addition, among the state items illustrated in Fig. 4, "document type" to "time period" are attributes of the electronic document. In addition to the attributes illustrated in Fig. 4, the attributes may include, for example, a medium with which the electronic document is received (a path through which the electronic document is acquired in the electronic document management service), and a detail (the number of pages or a data amount) of the electronic document. Of course, the attributes included in the state items are not limited to these examples.

The operation performed in the past with respect to the electronic document of the state indicated by the state information is uniquely identified by the operation ID. In the present exemplary embodiment, a detail of the operation is stored in the operation detail DB 38.

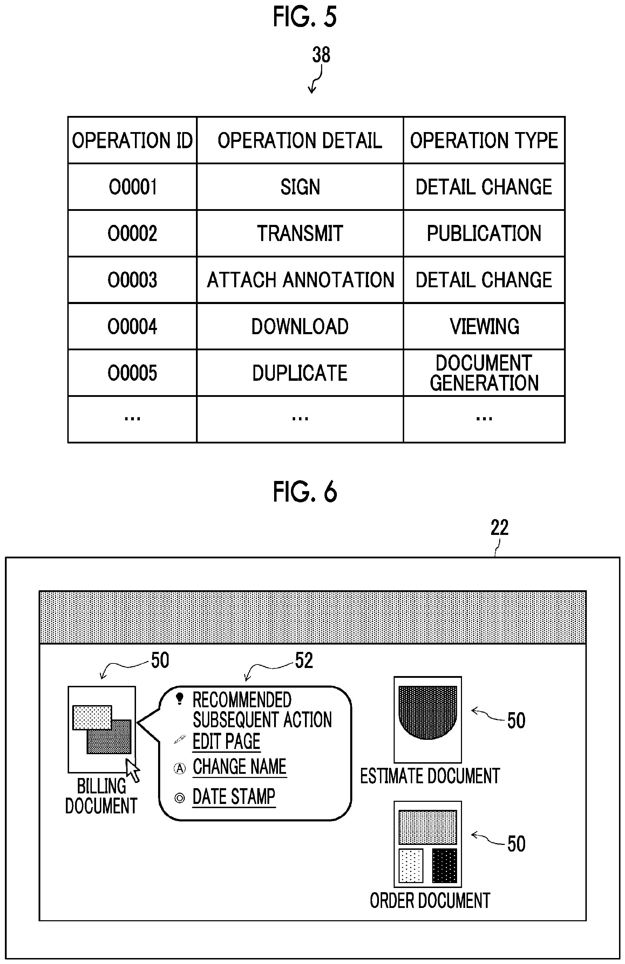

Fig. 5 is a conceptual diagram illustrating an example of a detail of the operation detail DB 38. In the operation detail DB 38, the operation ID, the detail of the operation, and a type of the operation are associated with each other. That is, the operation ID stored in the operation history DB 36 and the detail stored in the operation detail DB 38 correspond to the operation information. In addition, information stored in the operation detail DB 38 corresponds to operation type information. The type of the operation may be a type of an effect caused to the electronic document by the processing related to the operation. For example, executing processing related to an operation detail "sign" or "attach annotation" results in a change in the detail of the electronic document. Thus, the operation type of the operation detail "sign" or "attach annotation" is "detail change". In addition, executing processing related to an operation detail "transmit" results in a state where the electronic document is viewable by other people. Thus, the operation type of the operation detail "transmit" is "publication".

As described above, the state information of the electronic document and the operation ID are associated with each other in the operation history DB 36, and the operation ID and the detail of the operation are associated with each other in the operation detail DB 38. Thus, the state information of the electronic document and the operation information indicating the operation performed in the past with respect to the electronic document of the state are said to be associated with each other by combining the operation history DB 36 with the operation detail DB 38. The state information and the operation information may be associated with each other in one DB.

Each time the processing corresponding to the operation of the user is executed with respect to the electronic document in the electronic document management service, the state information of the electronic document and the operation detail of the operation are stored in association with the document ID of the electronic document in the operation history DB 36. Accordingly, the state information indicating the state of the electronic document and the operation ID of the operation performed with respect to the electronic document of the state are accumulated in the operation history DB 36. On the other hand, an operation that can be performed by the user in the electronic document (in other words, processing that can be executed by the electronic document management service in accordance with the operation of the user) is stored in the operation detail DB 38. Thus, the operation detail DB 38 is prepared in advance by, for example, a manager of the document management service.

With reference to Fig. 3 again, the processor 40 is configured with, for example, a central processing unit (CPU). The processor 40 has functions of a content processing unit 42, a training processing unit 44, a recommended operation specifying unit 46, and a notification unit 48 based on the information processing program stored in the memory 32.

The content processing unit 42 executes various types of processing with respect to the electronic document managed by the electronic document management service. Particularly, the content processing unit 42 executes processing with respect to the electronic document in accordance with the operation of the user with respect to the electronic document. In the present exemplary embodiment, in a case where an access request to the electronic document management service is received from the user terminal 12 used by the user, the content processing unit 42 executes authentication processing to authenticate the user. The authentication processing may be processing that is already known. For example, the content processing unit 42 authenticates the user by causing the user to input a user ID and a password and by referring to a user ID and a password stored in a user DB (not illustrated). After the authentication, the electronic document management service is provided to the user, and the content processing unit 42 executes processing with respect to the electronic document in accordance with the operation of the user with respect to the electronic document in the electronic document management service.

Each time processing with respect to the electronic document is executed in accordance with the operation of the user, the content processing unit 42 stores the state information indicating the state of the electronic document before the operation and the operation ID of the operation in association with each other in the operation history DB 36. As described above, the state information includes the attributes of the electronic document and the operation performed so far with respect to the electronic document. The content processing unit 42 can acquire the attributes of the electronic document from the meta-information of the electronic document or from the information related to the electronic document included in the electronic document management service. In a case where the attributes of the electronic document include information related to the user who has operated the electronic document, information related to the authenticated user can be acquired from the user DB in which information related to each user is stored. In addition, the content processing unit 42 can acquire the operation performed so far with respect to the electronic document from the operation history DB 36.

The training processing unit 44 executes training processing for training the learning model 34. Specifically, the training processing unit 44 trains the learning model 34 via supervised learning using training data. Specifically, the training processing unit 44, using the training data including the state information indicating the state of the electronic document and the operation information indicating the operation performed in the past with respect to the electronic document of the state, trains the learning model 34 to predict and output the operation to be performed with respect to the electronic document based on the state of the electronic document.

As described above, the state information indicating the state of the electronic document is stored in the operation history DB 36, and the operation information indicating the operation performed in the past with respect to the electronic document of the state is stored in the operation detail DB 38. Accordingly, the training processing unit 44 trains the learning model 34 using the state information stored in the operation history DB 36 and the operation information that is stored in the operation detail DB 38 and that is associated with the state information as the training data.

Specifically, the training processing unit 44 inputs one state information as the training data stored in the operation history DB 36 into the learning model 34. The learning model 34 predicts the operation to be performed with respect to the electronic document of the state indicated by the state information and outputs a prediction result as output data. The training processing unit 44 calculates a difference between the output data of the learning model 34 and the operation information (used as the training data) that is stored in the operation detail DB 38 and that is associated with the input state information, and adjusts parameters in the learning model 34 to decrease the difference. The learning model 34 is trained by repeating the training processing.

In a case where the state information indicating the state of the electronic document is input, the learning model 34 that is sufficiently trained can output the operation to be performed with respect to the electronic document with high accuracy. The learning model 34 may predict a plurality of operations to be performed with respect to the electronic document indicated by the input state information and then output prediction accuracy for each operation. For example, in a case where the learning model 34 is a neural network, a softmax function can be provided as an activation function in an output layer of the neural network. In this case, the softmax function outputs the plurality of operations and the prediction accuracy of each operation.

The recommended operation specifying unit 46 specifies a recommended operation that is an operation to be performed with respect to a target electronic document as target content which is the electronic document operated by the user. For example, the electronic document selected by the user in the electronic document management service can be the target electronic document. Alternatively, the electronic document stored in the workspace dedicated to the user (a memory region only accessible by the user) in the electronic document management service can be the target electronic document of the user.

The recommended operation specifying unit 46 acquires the state information indicating the state of the target electronic document (a method of the acquisition is described above) and inputs the state information of the target electronic document into the trained learning model 34. The recommended operation specifying unit 46 specifies the recommended operation based on the output data of the learning model 34. For example, as described above, in a case where the learning model 34 outputs the plurality of operations and the prediction accuracy of each operation, the recommended operation specifying unit 46 specifies one or a plurality of operations that are output by the learning model 34 and that have the prediction accuracy higher than or equal to a threshold value as the recommended operation. Alternatively, the recommended operation specifying unit 46 may specify an operation having the highest prediction accuracy among the operations output by the learning model 34 as the recommended operation.

While the recommended operation specifying unit 46 specifies the recommended operation with respect to the target electronic document using the learning model 34 in the present exemplary embodiment, the recommended operation specifying unit 46 can also specify the recommended operation with respect to the target electronic document without using the learning model 34. For example, the recommended operation specifying unit 46 may specify the recommended operation with respect to the target electronic document using a statistical technique. Specifically, the recommended operation specifying unit 46 can extract a plurality of pieces of state information identical or similar to the state information of the target electronic document from the operation history DB 36 and specify the recommended operation based on statistics of a plurality of operations associated with the extracted plurality of pieces of state information. For example, the recommended operation specifying unit 46 can specify the most frequent operation among the plurality of operations associated with the extracted plurality of pieces of state information as the recommended operation.

The notification unit 48 notifies the user operating the target electronic document of the recommended operation specified by the recommended operation specifying unit 46. In the present exemplary embodiment, the notification unit 48 displays the recommended operation on a screen that is provided by the electronic document management service and that is displayed on the display 22 of the user terminal 12.

Fig. 6 is a diagram illustrating an example of the screen for providing the notification of the recommended operation. The screen illustrated in Fig. 6 is a screen provided by the electronic document management service and is a screen displayed in a case where the user operating the target electronic document accesses the workspace of the user. In the present specification, the screen will be referred to as a workspace screen. A thumbnail 50 of the electronic document stored in the workspace is displayed on the workspace screen. The notification unit 48 notifies the user of the recommended operation in the aspect of being associated with the thumbnail 50 of the target electronic document on the workspace screen. In the example in Fig. 6, the notification unit 48 displays a notification window 52 that shows three recommended operations of "edit page", "change name", and "date stamp". Here, "edit page" is, for example, processing of opening the electronic document represented by the thumbnail and of displaying a screen for receiving an operation for editing a described detail from the user. In addition, "change name" is, for example, processing of displaying a screen for receiving an operation of changing a name of the electronic document (in Fig. 6, "billing document", "estimate document", and "order document" are names of the respective electronic documents) from the user. In addition, "date stamp" is processing of receiving an operation of pressing a stamp representing the current date or of automatically pressing a time stamp on a predetermined location of the electronic document as an example of an operation detail of editing a page.

For example, as the user selects the electronic document by placing a mouse cursor on the thumbnail 50, the recommended operation specifying unit 46 can specify the recommended operation with respect to the target electronic document using the selected electronic document as the target electronic document, and the notification unit 48 can display the notification window 52 showing the specified recommended operation on the workspace screen. Alternatively, in a case where the user displays the workspace screen, the recommended operation specifying unit 46 may specify the recommended operation with respect to each target electronic document using a plurality of electronic documents stored in the workspace as the target electronic document, and the notification unit 48 may display each notification window 52 showing the recommended operation specified for each target electronic document in the aspect of being associated with each target electronic document.

By notifying the user of the recommended operation with respect to the target electronic document via the notification unit 48, the user may easily perceive the operation to be executed with respect to the target electronic document. The notification of the recommended operation to the user by the notification unit 48 may be provided by voice or the like instead of or in addition to the display on the display 22.

In the present exemplary embodiment, the user can perform a click or the like to select an icon or a character string indicating each recommended operation shown on the notification window 52. In a case where the user selects the icon or the character string of an intended recommended operation, an execution instruction of the selected recommended operation is transmitted to the server 14 from the user terminal 12, and the content processing unit 42 executes processing corresponding to the selected recommended operation in accordance with the execution instruction.

As described above, in a case where the learning model 34 outputs a plurality of recommended operations and prediction accuracy of each recommended operation, the notification unit 48, for example, may notify the user of the plurality of recommended operations in an aspect corresponding to the prediction accuracy of each recommended operation. For example, in the example in Fig. 6, in a case where the recommended operation "edit page" has the highest prediction accuracy, the recommended operation "change name" has the second highest prediction accuracy, and the recommended operation "date stamp" has the lowest prediction accuracy among the three recommended operation, the notification unit 48 may display the three recommended operations in a descending order of the prediction accuracy as illustrated in Fig. 6. Of course, the display aspect corresponding to the prediction accuracy of each recommended operation is not limited thereto. For example, the notification unit 48 may display a number or an icon indicating the prediction accuracy near an icon or a character string indicating each recommended operation.

In a case where the user performs an operation with respect to the target electronic document and where the content processing unit 42 executes the processing corresponding to the operation, the state of the target electronic document changes. After the user performs the operation with respect to the target electronic document, the recommended operation specifying unit 46, for example, may further specify a recommended operation with respect to the target electronic document after the operation by inputting the state information indicating the state of the target electronic document after the operation into the trained learning model 34. The notification unit 48, for example, may further notify the user of the recommended operation with respect to the target electronic document after the operation. Accordingly, for example, the recommended operation specifying unit 46 and the notification unit 48 may dynamically provide the notification of the recommended operation with respect to the target electronic document depending on the dynamically changing state of the target electronic document.

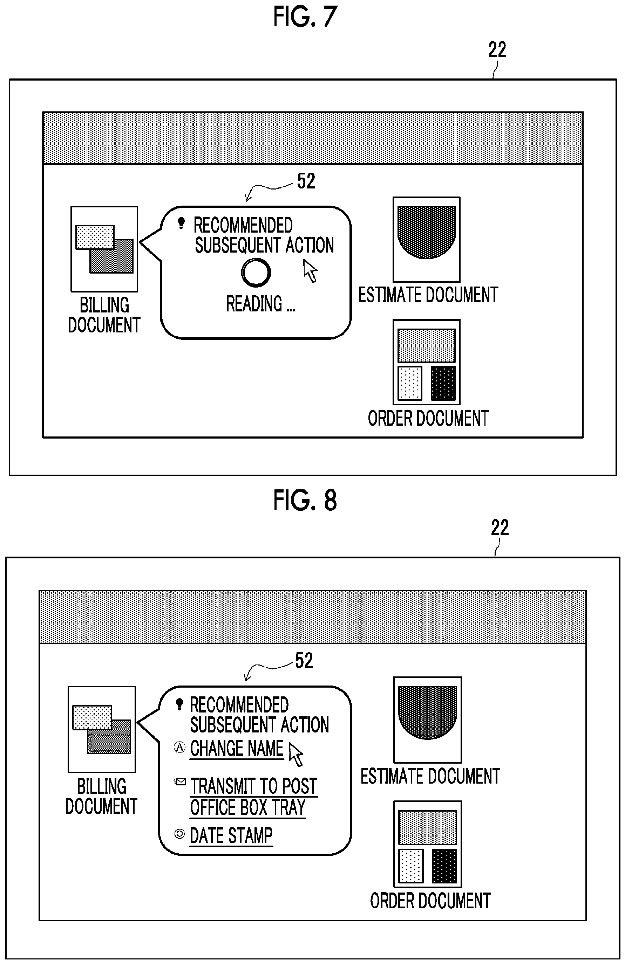

For example, the user selects the recommended operation "edit page" on the notification window 52 in Fig. 6. Accordingly, the content processing unit 42 executes processing corresponding to the recommended operation "edit page". For example, the electronic document ("billing document") represented by the thumbnail 50 in the state in Fig. 6 is open, and an editing operation such as changing including adding new content to the detail of the electronic document or deleting the already described detail is received from the user. Executing the processing changes the state of the target electronic document. The recommended operation specifying unit 46 specifies the recommended operation with respect to the target electronic document after the change by inputting the state information indicating the state of the target electronic document after the change into the trained learning model 34. During this processing, the notification unit 48, for example, may notify the user that the recommended operation is being specified on the notification window 52 as illustrated in Fig. 7.

In a case where the recommended operation with respect to the target electronic document after the change is specified, the notification unit 48 displays the notification window 52 showing the recommended operation with respect to the target electronic document after the change on the workspace screen as illustrated in Fig. 8.

Before the user performs the recommended operation, the recommended operation specifying unit 46 may specify a subsequent recommended operation that is an operation to be performed with respect to the target electronic document after the recommended operation is executed, and the notification unit 48 may notify the user of the subsequent recommended operation.

In this case, before the user performs the recommended operation, the recommended operation specifying unit 46 first predicts an after-operation state that is the state of the target electronic document after the recommended operation is executed, and acquires after-operation state information indicating the after-operation state. The recommended operation specifying unit 46 acquires the after-operation state information by predicting the after-operation state, which is the state of the target electronic document after the recommended operation is executed, based on a detail of the recommended operation. For example, in a case where the recommended operation is changing an extension of the target electronic document, the after-operation state information is obtained by changing the state item "extension" to the extension after the change and by changing the state item "previous operation" to extension change from the state information before performing the recommended operation. In addition, for example, the state item "time period" may be changed to a time period of the current time (for example, PM in a case where the current time is in the afternoon). Accordingly, the recommended operation specifying unit 46 can acquire the after-operation state information indicating the after-operation state by rewriting all or a part of the state information before performing the recommended operation based on the detail of the recommended operation.

The recommended operation specifying unit 46 inputs the acquired after-operation state information into the trained learning model 34. The recommended operation specifying unit 46 specifies the subsequent recommended operation with respect to the target electronic document of the after-operation state based on the output data of the learning model 34 with respect to the input.

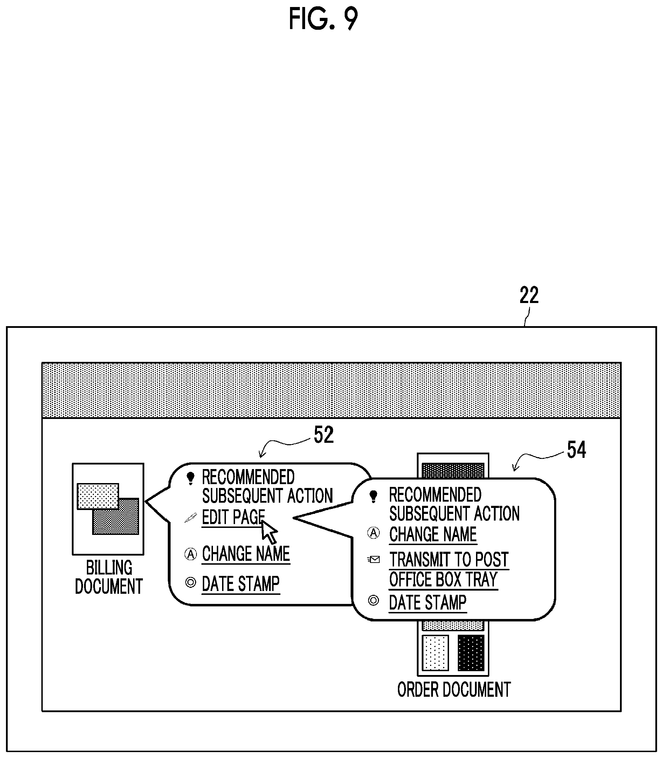

Fig. 9 is a diagram illustrating a first example of a screen for providing a notification of the subsequent recommended operation. The notification unit 48 notifies the user of the subsequent recommended operation with respect to the electronic document after the recommended operation is executed, in the aspect of being associated with the recommended operation on the workspace screen. In the example in Fig. 9, the notification unit 48 displays a notification window 54 showing the subsequent recommended operation in the aspect of being associated with the notification window 52 showing the recommended operation. Particularly, in the example in Fig. 9, the user, for example, places the mouse cursor to select the recommended operation "edit page" on the notification window 52 (the processing related to the recommended operation is not executed yet), and the subsequent recommended operation shown on the notification window 54 is an operation to be performed with respect to the target electronic document after the recommended operation "edit page" is executed. Thus, the notification window 54 is displayed in the aspect of being associated with the icon or the character string indicating the recommended operation "edit page" on the notification window 52.

In the present exemplary embodiment, the user can also select an icon or a character string indicating the subsequent recommended operation shown on the notification window 54. Here, in accordance with the selection of the subsequent recommended operation by the user, the content processing unit 42 may control display of the screen, for example, display of the screen for receiving the operation from the user, to sequentially execute the processing related to the recommended operation that changes the state of the target electronic document to the after-operation state as a target of the subsequent recommended operation and the processing related to the subsequent recommended operation with respect to the target electronic document. In the example in Fig. 9, each subsequent recommended operation shown on the notification window 54 is the operation to be performed with respect to the target electronic document after the recommended operation "edit page" is executed. Thus, for example, in a case where the user selects the subsequent recommended operation "change name", the content processing unit 42 first displays the screen for receiving the operation from the user to execute the processing related to the recommended operation "edit page" and controls the display of the screen to subsequently execute the processing related to the subsequent recommended operation "change name". Here, controlling, via the content processing unit 42, the display of the screen to sequentially execute the processing related to the recommended operation and the processing related to the subsequent recommended operation with respect to the target electronic document includes sequentially switching, via the content processing unit 42, from a screen for executing the processing related to the recommended operation to a screen for executing the processing related to the subsequent recommended operation independently of a user operation (that is, automatically switching to the screen for executing the processing related to the subsequent recommended operation in a case where the recommended operation is executed on the screen for executing the processing related to the recommended operation) to consecutively execute the processing related to the recommended operation and the processing related to the subsequent recommended operation. Alternatively, controlling, via the content processing unit 42, the display of the screen to sequentially execute the processing related to the recommended operation and the processing related to the subsequent recommended operation with respect to the target also includes, for example, in a case where the recommended operation is "edit page" and the subsequent recommended operation is "change name", displaying only the subsequent recommended operation "change name" on the notification window 52 after the processing related to the recommended operation "edit page" is executed (that is, in a case where the processing related to the recommended operation "edit page" is executed with respect to the target electronic document from the state in Fig. 6, displaying only the subsequent recommended operation "change name" selected as the recommended operation by the user as illustrated in Fig. 8 instead of presenting a plurality of recommended operations specified based on the subsequent state information of the target electronic document), and displaying the screen for receiving the operation from the user to execute the processing related to "change name" by receiving a selection of displayed "change name" from the user.

In a case where there are a plurality of recommended operations, the recommended operation specifying unit 46 may, for example, specify each subsequent recommended operation that is the operation to be performed with respect to the target electronic document after each recommended operation is executed. In addition, before the user performs the recommended operation, the recommended operation specifying unit 46 can further specify a further subsequent recommended operation that is an operation to be performed with respect to the target electronic document after the subsequent recommended operation is executed, by performing the identical processing to the above processing. Consequently, the recommended operation specifying unit 46 can form a tree structure that has the recommended operation as a root and that has a plurality of subsequent recommended operations as nodes and leaves. A depth (level) of the tree structure may be determined in advance by the manager or the like of the electronic document management service. The notification unit 48 may, for example, notify the user of the tree structure.

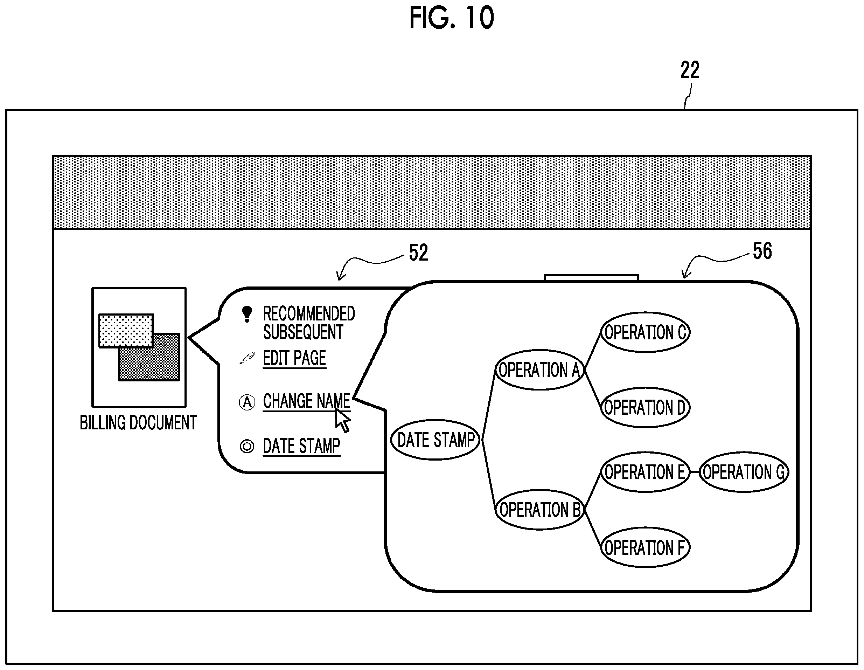

Fig. 10 is a diagram illustrating a second example of the screen for providing the notification of the subsequent recommended operation and is a diagram illustrating an example of a screen for providing a notification of the tree structure. As illustrated in Fig. 10, in a case where the user, for example, places the mouse cursor to select the recommended operation "change name" on the notification window 52 (the processing related to the recommended operation is not executed yet), the recommended operation specifying unit 46 specifies a tree structure that has the recommended operation (change name) as a root and that has the subsequent recommended operations as nodes and leaves, and the notification unit 48 displays a notification window 56 showing the tree structure on the workspace screen.

In a case where the user selects the subsequent recommended operation as a node or a leaf of the tree structure, the content processing unit 42 sequentially executes the processing related to the recommended operation and the subsequent recommended operation on a path from the root to the selected node or leaf. For example, in the example in Fig. 10, in a case where the user selects the operation D that is a leaf, the content processing unit 42 sequentially executes processing related to the recommended operation "change name", the subsequent recommended operation "operation A", and the subsequent recommended operation "operation D". In addition, in a case where the user selects the operation E that is a node, the content processing unit 42 sequentially executes processing related to the recommended operation "change name", the subsequent recommended operation "operation B", and the subsequent recommended operation "operation E".

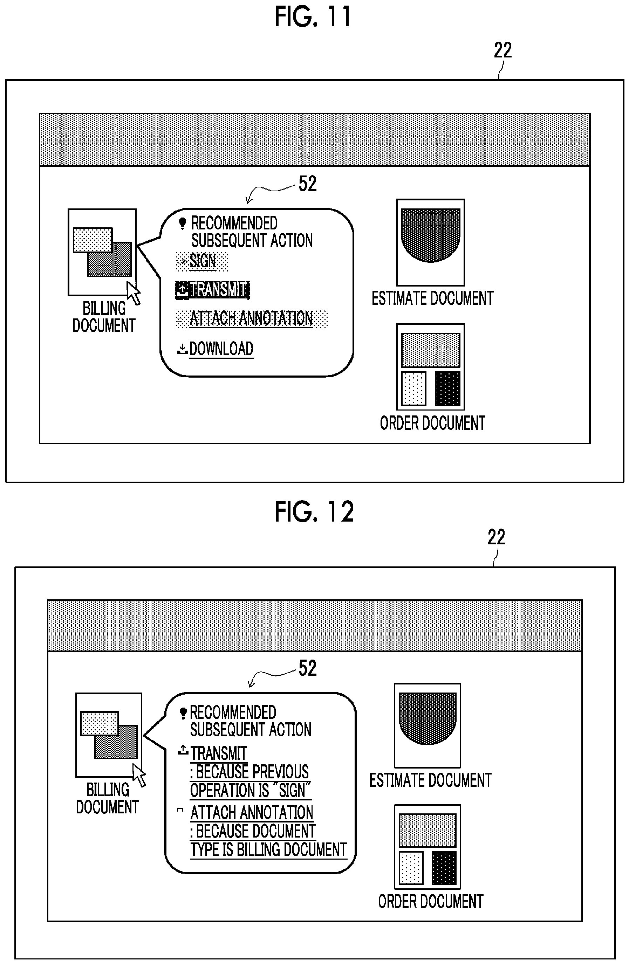

The notification unit 48 may, for example, display the recommended operation specified by the recommended operation specifying unit 46 on the display 22 in an aspect corresponding to a type of the recommended operation based on the operation type information stored in the operation detail DB 38. Fig. 11 is a diagram illustrating an example of a notification screen for providing the notification of the recommended operation in the aspect corresponding to the type of the recommended operation. In the example in Fig. 11, "sign", "transmit", "attach annotation", and "download" are specified as the recommended operation and are displayed on the notification window 52. Here, the operation types of the recommended operations "sign" and "attach annotation" are "detail change", and the operation type of the recommended operation "transmit" is "publication" in the operation detail DB 38 (refer to Fig. 5). Thus, the notification unit 48 displays the recommended operation "sign" and the recommended operation "attach annotation" in the identical display aspect and displays the recommended operation "transmit" and the recommended operation "sign" or "attach annotation" in different display aspects. Similarly, since the operation type of the recommended operation "download" is "viewing", the notification unit 48 displays the recommended operation "sign" or "attach annotation" and the recommended operation "transmit" in different display aspects.

Accordingly, the user may easily perceive the operation type of the recommended operation. Furthermore, erroneously selection of the recommended operation is suppressed. For example, in a case where the user is not to change the detail of the target electronic document, selection of the recommended operation "sign" or "attach annotation" by the user can be suppressed by causing the user to perceive that the recommended operations are operations that change the detail of the target electronic document.

In the present exemplary embodiment, the state information includes a plurality of state items. In this case, the recommended operation specifying unit 46 can calculate which state item is prioritized to output the recommended operation by the learning model 34 among the plurality of state items included in the state information of the target electronic document. In other words, the recommended operation specifying unit 46 can calculate a degree of contribution of each state item indicating how much each state item included in the state information of the target electronic document has contributed to specifying of the recommended operation.

Specifically, the recommended operation specifying unit 46 first obtains first output data that is the output data of the trained learning model 34 in a case where first state information indicating the state of the target electronic document is input. Next, the recommended operation specifying unit 46 obtains second output data that is the output data of the trained learning model 34 in a case where second state information obtained by slightly changing a value of one (hereinafter, referred to as a "target state item") of the plurality of state items included in the first state information is input. The recommended operation specifying unit 46 calculates a difference between the first output data and the second output data. As the difference is increased, the degree of contribution of the target state item is increased. The recommended operation specifying unit 46 calculates the degree of contribution of each state item by performing the above processing using each state item included in the state information of the target electronic document as the target state item.

The notification unit 48 may, for example, notify the user of the state item that has contributed to specifying of the recommended operation (in other words, the state item having a high degree of contribution) based on the degree of contribution of each state item calculated by the recommended operation specifying unit 46. For example, as illustrated in Fig. 12, the notification unit 48 notifies the user of the recommended operation "transmit" and also the state item "previous operation" that has contributed to specifying of the recommended operation on the notification window 52.

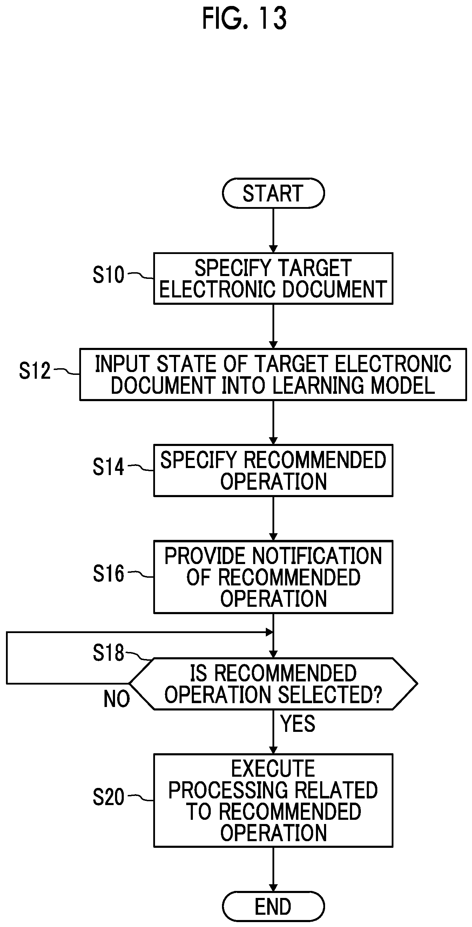

The above is a summary of the server 14 according to the present exemplary embodiment. Hereinafter, a flow of processing of the server 14 will be described in accordance with the flowchart illustrated in Fig. 13.

In step S 10, the recommended operation specifying unit 46 specifies the target electronic document.

In step S12, the recommended operation specifying unit 46 acquires the state information indicating the state of the target electronic document specified in step S10 and inputs the state information into the trained learning model 34.

In step S14, the learning model 34 outputs one or a plurality of operations to be performed with respect to the target electronic document as the output data based on the state information of the target electronic document. The recommended operation specifying unit 46 specifies the recommended operation with respect to the target electronic document based on the output data of the learning model 34.

In step S16, the notification unit 48 notifies the user of the recommended operation specified in step S14. Here, the notification unit 48 displays the notification window 52 (refer to Fig. 6) showing the recommended operation on the workspace screen on the display 22 of the user terminal 12.

In step S 18, the content processing unit 42 determines whether or not the user has selected the recommended operation displayed in step S16. In a case where the user has selected the recommended operation, a transition is made to step S20.

In step S20, the content processing unit 42 executes the processing related to the recommended operation selected by the user in step S18 with respect to the target electronic document. In addition, the content processing unit 42 stores the state information indicating the state of the target electronic document subjected to the recommended operation and the operation ID of the recommended operation in association with each other in the operation history DB 36.

While the exemplary embodiment according to the present invention has been described above, the present invention is not limited to the exemplary embodiment and can be subjected to various changes without departing from the gist of the present invention.

For example, while the processor 40 (specifically, the training processing unit 44) of the server 14 trains the learning model 34 in the present exemplary embodiment, the training processing of the learning model 34 may be performed by an apparatus other than the server 14, and the trained learning model 34 may be stored in the memory 32. In this case, the processor 40 may not have the function of the training processing unit 44. The operation history DB 36 and the operation detail DB 38 are not required to be stored in the memory 32 of the server 14 and may be stored in a memory accessible from the apparatus that executes the training processing.

In addition, while the learning model 34 is stored in the memory 32 of the server 14 in the present exemplary embodiment, the learning model 34 is not necessarily required to be stored in the memory 32 and may be stored in a memory of another apparatus accessible from the server 14.

In addition, while the processor 40 of the server 14 has the functions of the recommended operation specifying unit 46 and the notification unit 48 in the present exemplary embodiment, processors of different apparatuses may have these functions. For example, a first processor of a first information processing apparatus may have the function of the recommended operation specifying unit 46, and a second processor of a second information processing apparatus may have the function of the notification unit 48. In this case, an information processing apparatus configured with a plurality of information processing apparatuses has the functions according to the exemplary embodiment of the present invention.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) An information processing apparatus comprising:
   a processor configured to:
   specify a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content; and
   notify the user of the recommended operation.
(((2))) The information processing apparatus according to (((1))), wherein the processor is configured to:
   after the user performs an operation with respect to the target content, specify the recommended operation with respect to the target content after the operation by inputting state information indicating a state of the target content after the operation into the learning model; and
   notify the user of the recommended operation with respect to the target content after the operation.
(((3))) The information processing apparatus according to (((1))),
   wherein the learning model outputs a plurality of recommended operations and prediction accuracy of each recommended operation, and
   the processor is configured to:
      notify the user of the plurality of recommended operations in an aspect corresponding to the prediction accuracy of each recommended operation.
(((4))) The information processing apparatus according to (((1))), wherein the processor is configured to:
   before the user performs the recommended operation, predict an after-operation state that is a state of the target content after the recommended operation is executed;
   specify a subsequent recommended operation that is an operation to be performed with respect to the target content of the after-operation state, by inputting after-operation state information indicating the after-operation state into the learning model; and
   notify the user of the subsequent recommended operation.
(((5))) The information processing apparatus according to (((4))), wherein the processor is configured to:
   acquire the after-operation state information by rewriting the state information before performing the recommended operation based on a detail of the recommended operation.
(((6))) The information processing apparatus according to (((4))) or (((5))), wherein the processor is configured to:
   in accordance with selection of the subsequent recommended operation by the user, control display of a screen to sequentially execute processing related to the recommended operation that changes the state of the target content to the after-operation state as a target of the subsequent recommended operation and processing related to the subsequent recommended operation with respect to the target content.
(((7))) The information processing apparatus according to (((1))), wherein the processor is configured to:
   display the recommended operation on a display unit in an aspect corresponding to the recommended operation based on operation type information in which an operation and a type of the operation are associated with each other.
(((8))) The information processing apparatus according to (((1))),
   wherein the state information includes a plurality of state items, and
   the processor is configured to:
      calculate a degree of contribution indicating a degree of contribution to specifying of the recommended operation for each state item based on a difference between output data of the trained learning model in a case where first state information of the target content is input and output data of the trained learning model in a case where second state information obtained by changing a value of one of a plurality of state items included in the first state information is input; and
      notify the user of the state item that has contributed to specifying of the recommended operation based on the degree of contribution of each state item.
(((9))) An information processing program causing a computer to:
   specify a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content; and
   notify the user of the recommended operation.

According to the invention according to (((1))) or (((9))), the user can easily perceive the operation to be executed with respect to the electronic content, compared to the user in a case where the user is not notified of the operation to be executed with respect to the electronic content operated by the user.

According to the invention according to (((2))), the recommended operation of which the user is notified can be dynamically changed depending on a change in the state of the target content corresponding to the operation of the user.

According to the invention according to (((3))), the user can perceive the prediction accuracy of the plurality of recommended operations.

According to the invention according to (((4))) or (((5))), the user can perceive the subsequent recommended operation before performing the recommended operation.

According to the invention according to (((6))), an effort of the user for executing the processing related to the recommended operation and the processing related to the subsequent recommended operation with respect to the target content can be reduced, compared to the effort in a case where the recommended operation and the subsequent recommended operation are sequentially performed with respect to the target content.

According to the invention according to (((7))), the user can perceive the type of the recommended operation.

According to the invention according to (((8))), the user can perceive the state item that has contributed to specifying of the recommended operation.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
12: user terminal
14: server
16: communication line
20, 30: communication interface
22: display
24: input interface
26, 32: memory
28, 40: processor
34: learning model
36: operation history DB
38: operation detail DB
42: content processing unit
44: training processing unit
46: recommended operation specifying unit
48: notification unit

## Claims

1. An information processing apparatus comprising:
a processor configured to:
specify a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content; and
notify the user of the recommended operation.

2. The information processing apparatus according to claim 1, wherein the processor is configured to:
after the user performs an operation with respect to the target content, specify the recommended operation with respect to the target content after the operation by inputting state information indicating a state of the target content after the operation into the learning model; and
notify the user of the recommended operation with respect to the target content after the operation.

3. The information processing apparatus according to claim 1,
wherein the learning model outputs a plurality of recommended operations and prediction accuracy of each recommended operation, and
the processor is configured to:
notify the user of the plurality of recommended operations in an aspect corresponding to the prediction accuracy of each recommended operation.

4. The information processing apparatus according to claim 1, wherein the processor is configured to:
before the user performs the recommended operation, predict an after-operation state that is a state of the target content after the recommended operation is executed;
specify a subsequent recommended operation that is an operation to be performed with respect to the target content of the after-operation state, by inputting after-operation state information indicating the after-operation state into the learning model; and
notify the user of the subsequent recommended operation.

5. The information processing apparatus according to claim 4, wherein the processor is configured to:
acquire the after-operation state information by rewriting the state information before performing the recommended operation based on a detail of the recommended operation.

6. The information processing apparatus according to claim 4 or 5, wherein the processor is configured to:
in accordance with selection of the subsequent recommended operation by the user, control display of a screen to sequentially execute processing related to the recommended operation that changes the state of the target content to the after-operation state as a target of the subsequent recommended operation and processing related to the subsequent recommended operation with respect to the target content.

7. The information processing apparatus according to claim 1, wherein the processor is configured to:
display the recommended operation on a display unit in an aspect corresponding to the recommended operation based on operation type information in which an operation and a type of the operation are associated with each other.

8. The information processing apparatus according to claim 1,
wherein the state information includes a plurality of state items, and
the processor is configured to:
calculate a degree of contribution indicating a degree of contribution to specifying of the recommended operation for each state item based on a difference between output data of the trained learning model in a case where first state information of the target content is input and output data of the trained learning model in a case where second state information obtained by changing a value of one of a plurality of state items included in the first state information is input; and
notify the user of the state item that has contributed to specifying of the recommended operation based on the degree of contribution of each state item.

9. An information processing program causing a computer to:
specify a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content; and
notify the user of the recommended operation.

10. An information processing method comprising:
specifying a recommended operation that is an operation to be performed with respect to target content that is electronic content operated by a user, by inputting state information indicating a state of the target content into a learning model that is trained to predict and output an operation to be performed with respect to the electronic content based on a state of the electronic content using training data including state information indicating the state of the electronic content and operation information indicating an operation performed in the past with respect to the electronic content; and
notifying the user of the recommended operation.

## Amended claims

### Amended claims in accordance with Rule 137(2) EPC.

1. An information processing apparatus (14), **characterized in** comprising:
a processor (40) configured to:
specify target content operated by a user;
acquire state information indicating a state of the target content;
input the state information into a learning model (34), wherein the learning model (34) is trained to predict and output an operation to be performed with respect to electronic content based on a state of the electronic content using training data including state information indicating the state of the electronic content and operation information indicating an operation performed in the past with respect to the electronic content;
acquire a plurality of recommended operations to be performed on the target content and prediction accuracy of each of the plurality of recommended operations outputted from the learning model (34);
notify the user of the plurality of recommended operations based on the prediction accuracy of the plurality of recommended operations; and
in response to a recommended operation among the plurality of recommended operations being selected by the user, execute processing related to the selected recommended operation on the target content.

2. The information processing apparatus (14) according to claim 1, wherein the processor (40) is further configured to:
before the selected recommended operation is executed:
predict an after-operation state that is a state of the target content after the selected recommended operation is executed;
input after-operation state information indicating the after-operation state into the learning model (34);
acquire a subsequent recommended operation that is an operation to be performed with respect to the target content outputted from the learning model (34); and
notify the user of the subsequent recommended operation.

3. The information processing apparatus (14) according to claim 2, wherein the processor (40) is configured to:
acquire the after-operation state information by rewriting the state information before performing the selected recommended operation based on a detail of the selected recommended operation.

4. The information processing apparatus (14) according to claim 2or 3, wherein the processor (40) is configured to:
in accordance with selection of the subsequent recommended operation by the user, control display of a screen to sequentially execute processing related to the selected recommended operation that changes the state of the target content to the after-operation state as a target of the subsequent recommended operation and processing related to the subsequent recommended operation with respect to the target content.

5. The information processing apparatus (14) according to claim 1, wherein the processor (40) is configured to:
display the plurality of recommended operations on a display unit (22) in an aspect corresponding to each of the plurality of recommended operations based on operation type information in which an operation and a type of the operation are associated with each other.

6. The information processing apparatus (14) according to claim 1,
wherein the state information includes a plurality of state items, and
the processor (40) is configured to:
calculate a degree of contribution indicating a degree of contribution to specifying of the plurality of recommended operations for each state item based on a difference between output data of the trained learning model in a case where first state information of the target content is input and output data of the trained learning model in a case where second state information obtained by changing a value of one of a plurality of state items included in the first state information is input; and
notify the user of the state item that has contributed to specifying of each of the plurality of recommended operations based on the degree of contribution of each state item.

7. An information processing program, **characterized in** causing a computer (14) to:
specify target content operated by a user;
acquire state information indicating a state of the target content;
input state information into a learning model (34), wherein the learning model (34) is trained to predict and output an operation to be performed with respect to electronic content based on a state of the electronic content using training data including state information indicating the state of the electronic content and operation information indicating an operation performed in the past with respect to the electronic content;
acquire a plurality of recommended operations to be performed on the target content and predicting accuracy of each of the plurality of recommended operations outputted from the learning model (34);
notify the user of the plurality of recommended operations based on the prediction accuracy of the plurality of recommended operations; and
in response to a recommended operation among the plurality of recommended operations being selected by the user, execute processing related to the selected recommended operation on the target content.

8. An information processing method **characterized in** comprising:
specifying target content operated by a user;
acquiring state information indicating a state of the target content;
inputting state information into a learning model (34), wherein the learning model (34) is trained to predict and output an operation to be performed with respect to electronic content based on a state of the electronic content using training data including state information indicating the state of the electronic content and operation information indicating an operation performed in the past with respect to the electronic content;
acquiring a plurality of recommended operations to be performed on the target content and predicting accuracy of each of the plurality of recommended operations outputted from the learning model (34);
notifying the user of the plurality of recommended operations based on the prediction accuracy of the plurality of recommended operations; and
in response to a recommended operation among the plurality of recommended operations being selected by the user, executing processing related to the selected recommended operation on the target content.
